# EUROPEAN PATENT APPLICATION

(11) **EP 4 567 064 A1**
(43) Date of publication of application: **11.06.2025**
(21) Application number: 23214868.4
(22) Date of filing: 07.12.2023
(51) Int. Cl.: C08L 23/04, C08L 23/06

(54) **POLYETHYLENE COMPOSITION FOR STRAPS, COMPRISING RECYCLATE POLYETHYLENE**

(71) Applicant: Basell Polyolefine GmbH, 50389 Wesseling (DE)
(72) Inventor: PERDOMI, Gianni, 44122 Ferrara (IT); DI PIETRO, Fabio, 44122 Ferrara (IT); GALVAN, Monica, 44122 Ferrara (IT)
(74) Representative: LyondellBasell

(57) **Abstract**

A polyethylene composition for preparing straps, comprising:
A) from 60 to 98% by weight of an ethylene polymer component having a density D^{A} from 950 to 965 kg/m³, a MIF value of from 15 to 50 g/10 min. and a stress cracking resistance according to full notch creep test (FNCT), according to ISO 16770:2004 at 50 °C 6.0 MPa, 2% by weight aqueous Arkopal N100 solution, equal to or greater than 3 hours;
B) from 2 to 40% by weight of an ethylene polymer component having a density D^{B} from 949 to 965 kg/m³, a MIE value from 0.1 to 3 g/10min. and a polydispersity index PDI from 6 to 25;
wherein PDI is the ratio Mw/Mn of weight average molecular weight Mw to number average molecular weight Mn and the amounts of A) and B) are referred to the total weight of A) + B).

## Description

### FIELD OF THE INVENTION

The present disclosure concerns a polyethylene composition for straps, comprising recyclate polyethylene and an additional ethylene polymer component.

### BACKGROUND OF THE INVENTION

Steel and plastic strappings are generally used in the transport and packaging field, for instance for fastening goods, in particular heavy goods, or as a reinforcement of rigid or flexible packaging.

Besides steel straps, the most commonly used plastic straps are made in polypropylene or polyethylene terephthalate, due to high rigidity, load retention and stability provided to packaging items (e.g. palletized goods). Straps in polyethylene, in particular HDPE, as described for instance in US3651196, have been mostly used for packaging of goods not requiring high load retention and especially for easier manual applications, due to their reduced rigidity with respect to polypropylene and polyethylene terephthalate.

Hence polyethylene straps still require improvement of critical mechanical properties.

Furthermore, since polyethylene is widely consumed for many applications, including packaging for food and other goods, automotive components, fibers and a wide variety of manufactured goods, thus creating concern regarding the environmental impact of the waste materials generated after the first use, there is strong interest in developing polyethylene compositions containing the maximum possible amount of recyclate polyethylene recovered from said waste materials, while maintaining the mechanical properties required for their use, in the present case for use in straps.

However, the multicomponent nature of the recyclate polyethylene generally results in low mechanical properties.

It has now been found that straps with an unusual combination of elongational properties (in particular elongation at break and load at break) and stiffness (Young's modulus) can be obtained from a polyethylene composition comprising a recyclate polyethylene and a polyethylene component with specific rheology properties and molecular weigh distribution values.

### SUMMARY OF THE INVENTION

Thus the present disclosure provides a polyethylene composition, hereinafter called "polyethylene composition (I)", comprising:
A) from 60 to 98% by weight, preferably from 65 to 95% by weight, more preferably from 68 to 93% by weight, of a recyclate ethylene polymer component having a density D^{A} from 950 to 965 kg/m³, preferably from 953 to 962 kg/m³, determined according to ISO 1183-1:2012 at 23°C, a MIF value of from 15 to 50 g/10 min., preferably from 18 to 50 g/10 min., more preferably from 25 to 45 g/10 min., most preferably from 28 to 45 g/10 min., wherein MIF is the Melt Flow Index MI measured according to ISO 1133-1:2011 at 190°C with a load of 21.6 kg, and an environmental stress cracking resistance according to full notch creep test (FNCT), according to ISO 16770:2004 at 50 °C 6.0 MPa, 2% by weight aqueous Arkopal N100 solution, equal to or greater than 3 hours, in particular from 3 to 40 hours, or from 3 to 18 hours, or from 3 to 14 hours;
B) from 2 to 40% by weight, preferably from 5 to 35% by weight, more preferably from 7 to 32% by weight, of an ethylene polymer component having a density D^{B} from 949 to 965 kg/m³, preferably from 952 to 960 kg/m³, a MIE value from 0.1 to 3 g/10min., preferably from 0.5 to 2 g/10min., wherein MIE is the Melt Flow Index MI measured according to ISO 1133-1:2011 at 190°C with a load of 2.16 kg, and a polydispersity index PDI from 6 to 25, preferably from 8 to 20, more preferably from 8 to 15;
wherein PDI is the ratio Mw/Mn of weight average molecular weight Mw to number average molecular weight Mn, measured by Gel Permeation Chromatography (GPC) and the amounts of A) and B) are referred to the total weight of A) + B).

The present disclosure provides also a strap comprising the above described polyethylene composition (I).

As other polyolefin components and/or components different from polyolefins can be present in the strap, it is to be understood that the present polyethylene composition (I) can constitute the overall polymer composition present in the strap, or be part of such polymer composition, and the total weight of the strap can be the sum of the said polyethylene composition (I) and of other components.

### DETAILED DESCRIPTION OF THE INVENTION

Preferred polyethylene compositions (I) are those wherein D^{A} - D^{B}, which is the difference between the density values of A) and B) respectively, is from 0.3 to 4, more preferably from 0.5 to 3 kg/m³.

As previously explained, the recyclate ethylene polymer component A) is a polyethylene recovered from plastic waste.

The recovery process generally consists of a standard waste treatment, including collection, shredding, sorting and washing.

As a consequence, the recyclate ethylene polymer component A) generally contains minor amounts of other polymeric and/or inorganic components.

The recyclate ethylene polymer component A) is preferably a PCW, i.e. a postconsumer waste, but it may also comprise pre-consumer waste (Pre-CW). The PCW is a waste material deriving from at least one use cycle. The Pre-CW is a plastic waste diverted from a manufacturing process which is not reutilized such as rework, regrind or scrap, and is not reincorporated in the same process that generated it.

Hence, in general terms, the recyclate ethylene polymer component A) is a material deriving from an article manufacturing process.

Preferably, the recyclate ethylene polymer component A) is a high density polyethylene (HDPE).

The MIP of the recyclate ethylene polymer component A) is preferably from 0.5 to 10 g/10 min., more preferably from 1 to 5 g/10 min., wherein MIP is the Melt Flow Index MI measured according to ISO 1133-1:2011 at 190°C with a load of 5 kg

The MIE of the recyclate ethylene polymer component A) is preferably from 0.1 to 10 g/10 min., more preferably from 0.2 to 5 g/10 min.

Advantageously but not necessarily, the ethylene polymer component A) has a weight average molecular weight Mw equal to or lower than 350000 g/mol (in particular, equal to or lower than 300000 g/mol).

In some non-limiting cases, the ethylene polymer component A) has a Mw equal to or higher than 90000 g/mol (in particular, equal to or higher than 120000 g/mol).

According to some non-limiting embodiments, the ethylene polymer component A) has a has a PDI from 8 to 30, in particular from 10 to 25.

According to some non-limiting embodiments, the ethylene polymer component A) has a z-average molecular weight Mz equal to or higher than 700000 g/mol (in particular, equal to or higher than 800000 g/mol); in particular, equal to or lower than 2000000 g/mol (more in particular, equal to or lower than 1500000 g/mol).

The ethylene polymer component B) is preferably a virgin polyethylene.

The expression "virgin polyethylene" means that it is a polymer which has not been subjected to any process for production of finished articles, for instance packaging items, pipes, bottles, containers, or semi-finished articles, like fibers or sheets for thermoforming.

Thus the virgin polyethylene has not been subj ected to post-production working, except for possible pelletization, which is still considered part of the polymer production process.

Advantageously but not necessarily, the ethylene polymer component B) has a weight average molecular weight Mw equal to or lower than 170000 g/mol (in particular, equal to or lower than 160000 g/mol).

In some non-limiting cases, the ethylene polymer component B) has a Mw equal to or higher than 90000 g/mol (in particular, equal to or higher than 100000 g/mol).

According to some non-limiting embodiments, the ethylene polymer component B) has z-average molecular weight Mz lower than 800000 g/mol (in particular, equal to or lower than 650000 g/mol); in particular, equal to or higher than 200000 g/mol (more in particular, equal to or higher than 250000 g/mol).

Advantageously but not necessarily, the ethylene polymer component B) has a Melt Index MIF from 5 to 28 g/10min., more preferably from 10 to 25 g/10min.

Preferred MIF/MIP values for both the ethylene polymer component A) and the ethylene polymer component B) are from 4 to 35, more preferably from 5 to 30.

In particular, preferred MIF/MIP values for the ethylene polymer component A) are from 8 to 30, more preferably from 10 to 30.

Specially preferred MIF/MIP values for the ethylene polymer component B) are from 4 to 20, more preferably from 5 to 15.

The ethylene polymer components A) and B) can be selected from ethylene homopolymers and ethylene copolymers containing alpha-olefin comonomer units (preferably in amounts up to 10% by weight) and their mixtures. Examples of the said alpha-olefin comonomer units are those having from 3 to 8 carbon atoms, in particular propylene, 1-butene, 1-pentene, 1-hexene, 1-octene and 4-methyl-1-pentene. 1-butene and 1-hexene are preferred.

The term "copolymer" as used herein includes polymers containing one kind or more than one kind of comonomers.

Said homopolymers and copolymers can be obtained by way of polymerization processes in the presence of coordination catalysts. Said processes and the homopolymers and copolymers obtained from them are widely described in the art.

In particular it is possible to carry out the polymerization process in the presence of a Ziegler-Natta catalyst, a single site catalyst or a chromium-based catalyst.

As is well known, a Ziegler-Natta catalyst comprises the product of the reaction of an organometallic compound of group 1, 2 or 13 of the Periodic Table of elements with a transition metal compound of groups 4 to 10 of the Periodic Table of Elements (new notation). In particular, the transition metal compound can be selected among compounds of Ti, V, Zr, Cr and Hf and is preferably supported on MgCl₂.

Particularly preferred catalysts comprise the product of the reaction of said organometallic compound of group 1, 2 or 13 of the Periodic Table of elements, with a solid catalyst component comprising a Ti compound supported on MgCl₂.

Preferred organometallic compounds are the organo-Al compounds.

The single site catalysts are known in the art and are generally selected from metallocene and non-metallocene single site catalysts.

Examples of metallocene single site catalysts are zirconocenes and hafnocenes, for instance cyclopentadienyl or indenyl complexes of zirconium or hafnium, like bis (cyclopentadienyl) zirconium dichloride; bis (indenyl) zirconium dichloride or bis (indenyl) hafnium dichloride.

Examples of non-metallocene single site catalysts are iron complex compounds preferably having a tridentate ligand.

Particularly suited tridentate ligands are 2,6-Bis[1-(phenylimino)ethyl] pyridine and preferably the corresponding compounds wherein both the two phenyl groups are substituted in the ortho-position with a halogen or tert. alkyl substituent.

Specific examples are 2,6-Bis[1-(2-tert.butylphenylimino)ethyl]pyridine iron(II) dichloride; 2,6-Bis[1-(2-tert.butyl-6-chlorophenylimino)ethyl]pyridine iron(II) dichloride or 2,6-Bis[1-(2,4-dichlorophenylimino)ethyl]pyridine iron(II) dichloride.

Said metallocene and non-metallocene single site catalysts can also be used in combination.

Preferably, the single site catalysts are reacted with activating compounds (cocatalysts), preferred examples of which are aluminoxanes, such as mono-methylaluminoxane (MAO), for instance.

Described in a simplified way, the chromium-based catalysts, also known as Phillips catalysts, are generally obtained by impregnating a support material, for example silica gel, with a chromium-containing solution, evaporating the solvent and heating the solid under oxidizing conditions, for example in an oxygen-containing atmosphere, at from 400 to 1000°C. This activation can be followed by a reduction which can, for example, be carried out by treating the chromium-containing solid with carbon monoxide at a temperature from 20 to 800°C.

Suitable chromium compounds for impregnation of the said support are chromium(VI) oxide, chromium salts such as chromium(III) nitrate and chromium(III) acetate, complex compounds such as chromium(III) acetylacetonate or chromium hexacarbonyl, or alternatively organometallic compounds of chromium such as bis(cyclopentadienyl)chromium(II), organic chromic esters or bis(aren)chromium(0).

The polymerization, which can be continuous or batch, is carried out, in the presence of said catalysts, following known techniques and operating in liquid phase, in the presence or not of inert diluent, or in gas phase, or by mixed liquid-gas techniques.

Reaction time, pressure and temperature relative to the polymerization steps are not critical, however it is best if the temperature is from 50 to 100°C. The pressure can be atmospheric or higher.

The regulation of the molecular weight is carried out by using known regulators, hydrogen in particular.

All the said ethylene homopolymers and copolymers are available on the market. Specific commercial polymers suited for producing the present polymer blend are described in the examples.

The polyethylene composition (I) is obtainable by melting and mixing the components, and the mixing is effected in a mixing apparatus at temperatures generally of from 180 to 310°C, preferably from 190 to 280°C, more preferably from 200 to 250°C.

Any known apparatus and technology can be used for this purpose.

Useful melt-mixing apparatus in this context are in particular extruders or kneaders, and particular preference is given to twin-screw extruders. It is also possible to premix the components at room temperature in a mixing apparatus.

During the preparation of the polyethylene composition (I), besides the main components A) and B) and other optional components, it is possible to introduce additives commonly employed in the art, such as stabilizing agents (against heat, light, U.V.), plasticizers, antiacids, antistatic and water repellant agents, pigments, polymer processing aids.

Preferably, the present strap comprises at least 70% by weight of the polyethylene composition (I), more preferably at least 80% by weight, in particular 90% or 95% by weight of polyethylene composition (I), with respect to the total weight of the strap, the upper limit being 100% by weight in all cases.

The present strap is typically characterized by an angular, like rectangular, cross-section.

Preferably the strap has a thickness from 3 to 10 mm and width from 0.1 to 2 mm.

The present strap has high load at break values, preferably from 120 to 250 MPa. The load at break is enhanced by applying a stretching step in the preparation of the strap, thus inducing orientation of the polymer chains.

Hence the present strap is preferably oriented by stretching.

Preferred stretching ratios (used to achieve the orientation) are from 7:1 to 10:1.

Straps are required to provide suitable stiffness and tenacity at break, while also dimensional stability (section : width X height) is relevant property providing a suitable dimensional consistent strap to be wound in very regular shaped reels and then used in automatic wrapping systems.

Preferably, the present strap has at least one of the following properties:
- Elongation at Break from 10% to 35%;
- Young's Modulus from 1500 to 3500 MPa.

Details of the test methods are given in the examples.

In some embodiments, the composition has a load break from 120 to 200 MPa, an elongation at break from 20 to 35% and a Young's Modulus from 1500 to 2300 MPa, measured on a sample with a width of 5 mm, a thickness from 0.32 to 0.45 mm and a stretching ratio of 8:1.

In some embodiments, the composition has a load break from 140 to 250 MPa, an elongation at break from 15 to 28% and a Young's Modulus from 1800 to 3500 MPa, measured on a sample with a width of 5 mm, a thickness from 0.30 to 0.40 mm and a stretching ratio of 9:1.

As the stretching ratio increases, the load at break increases by 5 to 45% for a stretching ratio of 9:1 when compared to a stretching ratio of 8:1.

The elongation at break decreases and the Young's Modulus increases as the stretching ratio increases.

Due to the said advantageous properties, the present strap can be used for packaging of palletized goods by using load and shape secured by the polyethylene strap and overwrapped with polyethylene film (can be either shrink or stretch film) that can be easily collected during unloading, all together, and possibly sent to recycling process.

The present strap can be obtained with techniques commonly known in the art.

In general terms, the process for preparing the strap comprises the following steps:
(a) melting the polyethylene composition (I) and the other polymer components, when present;
(b) extruding a precursor tape;
(c) stretching the precursor tape;
(d) optionally finishing the strap obtained from step (c).

The melting step (a) and the extrusion step (b) are generally carried out continuously in sequence by using mono- or twin-screw extruders, equipped with a suited extrusion head. Thus also the previously described melt-mixing step can be carried out in the same extrusion apparatus.

The extrusion heads are generally flat dies.

A typical finishing treatment on the extruded strap is embossing, where a smooth strap becomes regularly rough (e.g. by means of squared or lozenge surface rolls tool under pressure) so to increase grip and achieve easier friction weldability on packaging lines.

Also, very important is an annealing step, to improve dimensional stability of the strap and minimize accumulated hidden tension generated during the extrusion, cooling and stretching steps.

Typically the melting step (a) and the extrusion step (b) are carried out at the same temperatures as previously defined for the melt-mixing step, namely of from 180 to 310°C, preferably from 190 to 280°C, more preferably from 200 to 250°C.

Typical extrusion conditions are:
- temperature in the extruder head from 200 to 300°C;
- output value from 20 to 1000 kg/hour (on industrial plants).

The precursor tape obtained in step (b) is generally cooled by using for instance one or more chill rolls or by immersion in water at a temperature from 15 to 45°C.

To carry out the stretching treatment, the precursor tape is previously heated at a temperature from 40 to120-140°C. Heating can be achieved by using for example a hot air oven, heated rolls, a hot plate or by irradiation or other known means.

Stretching can be achieved by delivering the precursor tape through a series of rollers having different rotation speeds. Preferred ranges of stretching ratios so achieved are those previously specified.

The stretching ratio is the ratio between the high speed of the rollers of the stretching unit and the speed of the rollers of the take-off unit (primary speed). As previously mentioned, in the take-off unit the tape moving at low speed is heated before being stretched by applying faster speed.

### EXAMPLES

The practice and advantages of the various embodiments, compositions and methods as provided herein are disclosed below in the following examples. These Examples are illustrative only, and are not intended to limit the scope of the appended claims in any manner whatsoever.

The following analytical methods are used to characterize the polymer compositions and filaments.

### Density

Determined according to ISO 1183-1:2012 at 23°C.

### Melt Flow Index MI

Determined according to ISO 1133-1:2011 with the specified temperature and load.

### Molecular Weight Distribution Determination

The determination of the means Mw, Mn and Mz and of Mw/Mn derived therefrom was carried out by high-temperature gel permeation chromatography using a method described in ISO 16014-1, -2, -4, issue of 2003. The specifics according to the mentioned ISO standards are as follows: Solvent 1,2,4-trichlorobenzene (TCB), temperature of apparatus and solutions 145°C and as concentration detector a PolymerChar (Valencia, Paterna 46980, Spain) IR-4 infrared detector, capable for use with TCB. A WATERS Alliance 2000 equipped with the following pre-column SHODEX UT-G and separation columns SHODEX UT 806 M (3x) and SHODEX UT 807 (Showa Denko Europe GmbH, Konrad-Zuse-Platz 4, 81829 Muenchen, Germany) connected in series was used.

The solvent was vacuum distilled under Nitrogen and was stabilized with 0.025% by weight of 2,6-di-tert-butyl-4-methylphenol. The flowrate used was 1 ml/min, the injection was 500µl and polymer concentration was in the range of 0.01% < conc. < 0.05% w/w. The molecular weight calibration was established by using monodisperse polystyrene (PS) standards from Polymer Laboratories (now Agilent Technologies, Herrenberger Str. 130, 71034 Boeblingen, Germany) in the range from 580g/mol up to 11600000g/mol and additionally with Hexadecane.

The calibration curve was then adapted to Polyethylene (PE) by means of the Universal Calibration method (Benoit H., Rempp P. and Grubisic Z., & in J. Polymer Sci., Phys. Ed., 5, 753(1967)). The Mark-Houwing parameters used herefore were for PS: k_{PS}= 0.000121 dl/g, α_{PS}=0.706 and for PE k_{PE}= 0.000406 dl/g, α_{PE}=0.725, valid in TCB at 135°C. Data recording, calibration and calculation was carried out using NTGPC_Control_V6.02.03 and NTGPC_V6.4.24 (hs GmbH, Hauptstraße 36, D-55437 Ober-Hilbersheim, Germany) respectively.

### Environmental stress cracking resistance according to full notch creep test (FNCT)

The environmental stress cracking resistance of polymer samples was determined in accordance to international standard ISO 16770:2004 (FNCT) in aqueous surfactant solution. From the polymer sample a compression moulded 10 mm thick sheet has been prepared. The bars with squared cross section (10×10×100 mm) were notched using a razor blade on four sides perpendicularly to the stress direction. A notching device described in M. Fleissner in Kunststoffe 77 (1987), pp. 45 was used for the sharp notch with a depth of 1.6 mm.

The load applied is calculated from tensile force divided by the initial ligament area. Ligament area is the remaining area = total cross-section area of specimen minus the notch area. For FNCT specimen: 10x10 mm² - 4 times of trapezoid notch area = 46.24 mm² (the remaining cross-section for the failure process / crack propagation). The test specimen was loaded with standard condition suggested by the ISO 16770 with constant load of 6 MPa at 50°C in a 2% (by weight) water solution of non-ionic surfactant ARKOPAL N100. Time until rupture of test specimen was detected.

### Comonomer content

The comonomer content was determined by means of IR in accordance with ASTM D 6248 98, using an FT-IR spectrometer Tensor 27 from Bruker, calibrated with a chemometric model for determining ethyl- side-chains in PE for butene-1 as comonomer and butyl- side-chains in PE for hexene-1 as comonomer.

### Load at Break, Elongation at break and Young's Modulus

Measured according to ASTM D882-18 with a dynamometer Lloyd, model LRX-Plus, equipped with a 2500 N cell.

The Young's modulus, also called Elasticity Modulus, is equal to the longitudinal stress divided by the strain and is determined on the stress/strain curve.

### Examples 1 and 2 and Comparative Example 1

The following materials are used to prepare the polyethylene composition (I).

### Ethylene polymer component A)

PCW HDPE, having the properties reported in Table I below.

It is available on the market with trademark *Circulen*Recover ^{®} HD5603 Silver, sold by LyondellBasell.

### Ethylene polymer component B)

Ethylene copolymer having the properties reported in Table I below.

It is available on the market with trademark *Luflexen* hyPE 56P FA, sold by LyondellBasell.

**Table I**

| **A** | |
|---|---|
| Density [kg/m³] | 956 |
| MIE [g/10 min.] | 0.38 |
| MIF [g/10 min.] | 36.4 |
| MIP [g/10 min.] | 1.71 |
| MIF/MIP | 21.3 |
| FNCT [hours] | 8 |
| Mw [g/mol] | 187170 |
| Mn [g/mol] | 9733 |
| Mw/Mn | 19.2 |
| Mz [g/mol] | 1096620 |

| **B** | |
|---|---|
| Density [kg/m³] | 955 |
| MIF [g/10 min.] | 18.8 |
| MIP [g/10 min.] | 2.18 |
| MIF/MIP | 8.6 |
| MIE [g/10 min.] | 0.77 |
| Mw [g/mol] | 147021 |
| Mn [g/mol] | 11807 |
| Mw/Mn | 12.45 |
| Mz [g/mol] | 496325 |

### Preparation of the polyethylene composition (I)

Components A) and B) were mixed with a usual stabilizing additive composition and blended together by extrusion in a twin screw extruder Berstorff ZE 25 (length/diameter ratio of screws: 34) under nitrogen atmosphere in the following conditions:

| | |
|---|---|
| Rotation speed: | 250 rpm; |
| Extruder output: | 15 kg/hour; |
| Melt temperature: | 245 °C. |

The stabilizing additive composition was made of the following components:
- 0.1% by weight of Irganox^{®} 1010;
- 0.1% by weight of Irgafos^{®} 168;
- 0.2% by weight of calcium stearate;
all percent amounts being referred to the total weight of the polymer and stabilizing additive composition.

The said Irganox^{®} 1010 is 2,2-bis[3-[,5-bis(1,1-dimethylethyl)-4-hydroxyphenyl)-1-oxopropoxy]methyl]-1,3-propanediyl-3,5-bis(1,1-dimethylethyl)-4-hydroxybenzene-propanoate, while Irgafos^{®} 168 is tris(2,4-di-tert.-butylphenyl)phosphite.

The so obtained polyethylene composition (I) was processed in an extrusion line based on 25 mm diameter 27 LID extruder, gear pump, screen, head with 1 primary tape die with rectangular opening sized 22.0 X 1.3 mm, quenching water bath, dryer, slow speed rolls, 2 m stretching oven with triple passages, high speed godet, embossing unit, 2 m annealing oven, annealing speed godet and winding unit.

The main operative conditions were:
- Extruder temperature setting: 190 / 225 / 235 / 245 °C;
- Gear Pump temperature setting: 255 °C;
- Head / Die temperature setting: 265 / 275 °C;
- Actual Melt temperature: 265+/-5 °C;
- Output: 1.9 kg/h;
- Primary tape cooling water temperature: 25°C;
- Free space / distance die-exit to water : 10 cm;
- Stretching oven temperature: 130 °C;
- Annealing oven temperature: 110 °C.

The properties of the so obtained straps are reported, for all the examples, in Table II.

**Table II**

| **Example No.** | **1** | **2** | **3** | **Comp.1** |
|---|---|---|---|---|
| Amount of A) [% by weight] | 90 | 80 | 70 | 100 |
| Amount of B) [% by weight] | 10 | 20 | 30 | 0 |

| **Stretching ratio 8:1** | | | | |
|---|---|---|---|---|
| Width [mm] | 5.00 | 5.00 | 5.00 | 5.00 |
| Thickness [mm] | 0.34 | 0.38 | 0.34 | 0.34 |
| Load at Break [MPa] | 139 | 168 | 159 | 158 |
| Elongation at Break [%] | 29 | 25 | 27 | 23 |
| Young's Modulus [MPa] | 1710 | 2000 | 1980 | 1890 |

| **Stretching ratio 9:1** | | | | |
|---|---|---|---|---|
| Width [mm] | 5.00 | 5.00 | 5.00 | 5.00 |
| Thickness [mm] | 0.34 | 0.32 | 0.32 | 0.37 |
| Load at Break [MPa] | 172 | 187 | 214 | 165 |
| Elongation at Break [%] | 21.0 | 20.0 | 16.0 | 18 |
| Young's Modulus [MPa] | 2100 | 2220 | 2520 | 2090 |

## Claims

1. A polyethylene composition (I) comprising:
A) from 60 to 98% by weight, preferably from 65 to 95% by weight, more preferably from 68 to 93% by weight, of a recyclate ethylene polymer component having a density D^{A} from 950 to 965 kg/m³, preferably from 953 to 962 kg/m³, determined according to ISO 1183-1:2012 at 23°C, a MIF value of from 15 to 50 g/10 min., preferably from 18 to 50 g/10 min., more preferably from 25 to 45 g/10 min., most preferably from 28 to 45 g/10 min., wherein MIF is the Melt Flow Index MI measured according to ISO 1133-1:2011 at 190°C with a load of 21.6 kg, and an environmental stress cracking resistance according to full notch creep test (FNCT), according to ISO 16770:2004 at 50 °C 6.0 MPa, 2% by weight aqueous Arkopal N100 solution, equal to or greater than 3 hours, in particular from 3 to 40 hours, or from 3 to 18 hours, or from 3 to 14 hours;
B) from 2 to 40% by weight, preferably from 5 to 35% by weight, more preferably from 7 to 32% by weight, of an ethylene polymer component having a density D^{B} from 949 to 965 kg/m³, preferably from 952 to 960 kg/m³, a MIE value from 0.1 to 3 g/10min., preferably from 0.5 to 2 g/10min., wherein MIE is the Melt Flow Index MI measured according to ISO 1133-1:2011 at 190°C with a load of 2.16 kg, and a polydispersity index PDI from 6 to 25, preferably from 8 to 20, more preferably from 8 to 15;
wherein PDI is the ratio Mw/Mn of weight average molecular weight Mw to number average molecular weight Mn, measured by Gel Permeation Chromatography (GPC) and the amounts of A) and B) are referred to the total weight of A) + B).

2. The polyethylene composition of claim 1 or 2, wherein the ethylene polymer component B) is a virgin polyethylene.

3. The polyethylene composition of claim 1 or 2, wherein D^{A} - D^{B}, which is the difference between the density values of A) and B) respectively, is from 0.3 to 4, more preferably from 0.5 to 3 kg/m³.

4. The polyethylene composition of claim 1 or 2, wherein the ethylene polymer component A) has a Mw equal to or higher than 90000 g/mol, preferably equal to or higher than 120000 g/mol.

5. The polyethylene composition of claim 1 or 2, wherein the ethylene polymer component A) has a z-average molecular weight Mz equal to or higher than 700000 g/mol, preferably equal to or higher than 800000 g/mol.

6. The polyethylene composition of claim 1 or 2, wherein the ethylene polymer component B) has a Mw equal to or higher than 90000 g/mol, preferably equal to or higher than 100000 g/mol.

7. The polyethylene composition of claim 1 or 2, wherein the ethylene polymer component B) has a z-average molecular weight Mz lower than 800000 g/mol, preferably equal to or lower than 650000 g/mol.

8. The polyethylene composition of claim 1 or 2, wherein the ethylene polymer component B) has a Melt Index MIF from 5 to 28 g/10min., preferably from 10 to 25 g/lOmin.

9. The polyethylene composition of claim 1 or 2, wherein the MIF/MIP values for both the ethylene polymer component A) and the ethylene polymer component B) are from 4 to 35, preferably from 5 to 30.

10. Strap, comprising the polyethylene composition (I) of claim 1.

11. The strap of claim 10, stretched with a stretching ratio from 7:1 to 10:1.
